# EUROPÄISCHE PATENTSCHRIFT

(11) **EP 3 218 240 B1**
(45) Veröffentlichungstag und Bekanntmachung des Hinweises auf die Patenterteilung: **27.05.2020**
(21) Anmeldenummer: 16700058.7
(22) Anmeldetag: 06.01.2016
(51) Int. Cl.: B61D 1/00

(54) **WANDANORDNUNG FÜR EIN FAHRZEUG**
WALL ARRANGEMENT FOR A VEHICLE
AGENCEMENT DE PAROI POUR VÉHICULE

(30) Priorität: 30.01.2015 DE 102015201660
(43) Veröffentlichungstag der Anmeldung: 20.09.2017
(73) Patentinhaber: Siemens Mobility GmbH, 81739 München (DE)
(72) Erfinder: BISSELS, Stephan, 47638 Straelen (DE); WANCZURA, Stefan, 45665 Recklinghausen (DE)
(86) Internationale Anmeldenummer: PCT/EP2016/050109
(87) Internationale Veröffentlichungsnummer: WO 2016/120027

(56) Entgegenhaltungen:
- DE-A1- 4 301 763
- DE-A1- 19 509 676
- DE-A1-102011 088 509
- US-A1- 2003 196 567

## Beschreibung

Die Erfindung bezieht sich auf ein Fahrzeug, insbesondere Schienenfahrzeug, nach dem Oberbegriff von Anspruch 1.

Danach ist eine Wandanordnung für ein Fahrzeug bekannt, mit einer Sandwichplatte, die eine Kernschicht aufweist, die beidseitig mit jeweils einer metallischen Decklage versehen ist, wobei an wenigstens einer Seite der Sandwichplatte Randabschnitte der Decklagen von einer Stirnseite der Kernschicht aus vorstehen, und mit einem metallischen Anschlussprofil, das einen Randabschnitt aufweist, der in einen Zwischenraum zwischen den zwei vorstehenden Randabschnitten der Decklagen eingesetzt ist, wobei Innenseiten der vorstehenden Randabschnitte der Decklagen mittels jeweils einer Klebeschicht mit zugeordneten Außenflächen des eingesetzten Randabschnitts des Anschlussprofils strukturell verbunden sind.

Eine solche Wandanordnung ergibt sich beispielsweise aus der DE 10 2012 213 469 A1 der Anmelderin. Die dort vorgestellte Dachwandanordnung sieht eine Verklebung struktureller Art der Sandwichplatte mit einem Anschlussprofil vor.

Die oben angesprochenen Sandwichplatten, die beispielsweise als Aluminiumdeckbleche mit eingeklebtem Schaumkern vorliegen können, sind formsteife und leichte Bauelemente, die besonderes zur Herstellung einer flachen, ebenen oder gekrümmten Dachstruktur eines Schienenfahrzeug-Rohbaus geeignet sind. Um eine einfach Integration in die Rohbaustruktur durch Schweißen zu ermöglichen, ist die Sandwichplatte mit ihren Decklagen in ein Anschlussprofil aus Aluminiumprofilen eingeklebt. Die vorgenommene Klebung verfügt nicht über eine für Erdungszwecke ausreichende elektrische Leitfähigkeit.

Folglich müssen besondere Maßnahmen getroffen werden müssen, um eine zuverlässige Erdung zu realisieren.

Zu solchen Zwecken ist es dem Stand der Technik bekannt, zwei Bauteile, zwischen denen eine gute elektrische Leitfähigkeit gegeben sein muss, mittels Erdungskabeln miteinander zu verbinden. Dazu muss jedoch an jedem Bauteil eine Erdungslasche angeschweißt werden, an der wiederum das Erdungskabel elektrisch leitend befestigt wird.

Ausgehend hiervon liegt der Erfindung die Aufgabe zugrunde, eine Wandanordnung der eingangs genannten Art derart weiterzuentwickeln, dass mit geringem Aufwand eine zuverlässige elektrisch leitende Verbindung zwischen der Sandwichplatte und dem Anschlussprofil geschaffen wird.

Diese Aufgabe wird gelöst durch eine Wandanordnung gemäß Anspruch 1.

Danach ist, ausgehend von der eingangs beschriebenen Wandanordnung vorgesehen, dass wenigstens einer der vorstehenden Randabschnitte der Decklagen mit dem an seiner Innenseite anliegenden Randabschnitt des Anschlussprofils in einem Abstand zu der Klebeschicht mittels einer Schweißnaht elektrisch leitend verbunden ist.

Aufgrund der vorhandenen Schweißnaht ergibt sich eine elektrisch leitende Verbindung zwischen der Sandwichplatte, insbesondere ihrem vorstehenden Randabschnitt, und dem Anschlussprofil, wobei diese beiden Komponenten beispielsweise aus Aluminium gefertigt sein können. Es entfällt somit das bisher bekannte Anschweißen von Erdungslaschen an den betreffenden Komponenten sowie das Vorsehen der Erdungsleitung.

Dabei kann die Klebeschicht der Sandwichplatte zugewandt und die Schweißnaht dem Anschlussprofil zugewandt angeordnet sein. Dabei hat die Klebeschicht die Funktion, eine strukturelle Verbindung zwischen dem vorstehenden Randabschnitt der Decklage und dem Anschlussprofil zu schaffen, während die Hauptaufgabe der Schweißnaht darin besteht, eine elektrisch leitende Verbindung herzustellen. Entsprechend ist die Schweißnaht in ihren Abmessungen dadurch bestimmt, dass zu erwartende Ableitungsströme geeignet durchgeleitet werden können, ohne dass es zu unzulässigen Erwärmungen oder gar Aufglühen oder Aufschmelzen der Schweißstelle kommt.

An dem wenigstens einen vorstehenden Randabschnitt zwischen der Klebeschicht und der Schweißnaht kann eine Dichtungsschicht angeordnet sein. Diese Dichtungsschicht verhindert beim Fügen des vorstehenden Randabschnitts mit dem Anschlussprofil ein Verlaufen von Klebstoff in Richtung des Bereichs, in dem die Schweißnaht angeordnet werden soll.

Alternativ dazu ist es möglich, an dem wenigstens einen vorstehenden Randabschnitt zwischen der Klebeschicht und der Schweißnaht eine Nut zur Aufnahme überschüssigen Klebstoffs anzuordnen. In dieser Nut sammelt sich überschüssiger Klebstoff. Eine solche Einrichtung wird auch als "Harzfalle" bezeichnet.

Beide beispielhaft erläuterten Maßnahmen bewirken ein erforderliches Freihalten von Klebstoff des von der Klebeschicht in einem Abstand liegenden Schweißbereichs.

An dem wenigstens einen vorstehenden Randabschnitt kann die Klebeschicht eine Breite von 20 bis 50mm aufweisen. Dies gewährleistet eine geeignete strukturelle Verbindung des Randabschnitts der Decklage der Sandwichplatte mit dem Anschlussprofil. Je nach mechanischer Beanspruchung des Fügebereichs kann von dieser Breite auch nach oben oder nach unten abgewichen werden.

An dem wenigstens einen vorstehenden Randabschnitt kann sich die Schweißnaht in einem Abstand, z. B. wenigstens 5mm, von der Klebeschicht befinden. Die Einhaltung dieses Abstands gewährleistet, dass der Schweißvorgang zur Realisierung der Schweißnaht die Struktur der Klebeverbindung zwischen dem Randabschnitt der Decklage und dem Anschlussprofil nur vernachlässigbar beeinflusst.

Die an dem wenigstens einen vorstehenden Randabschnitt vorgesehene Schweißnaht kann als Schrittnaht (gerade, gewellt) ausgeführt sein. Auf diese Weise werden in der gewählten Schrittweite elektrisch leitende Kontakte zwischen dem vorstehenden Randabschnitt der Decklage und dem Anschlussprofil geschaffen.

An dem wenigstens einen Randabschnitt kann ein Klebeschicht freier Endbereich vorgesehen sein, der eine Breite von wenigstens 10 mm aufweist und für die Schweißnaht vorgesehen ist.Innerhalb dieses Breitebereichs kann die Schweißnaht geeignet angeordnet werden, beispielsweise etwa in der Mitte.

Die Sandwichplatte kann bevorzugt eine Dachwandung bilden, wobei das Anschlussprofil bei einem Schienenfahrzeug dann etwa im Voutenbereich angeordnet wäre.

Vorteilhafterweise kann die Schweißnaht mittels Laserschweißen hergestellt sein. Dieses Schweißverfahren erzeugt besonders geringen Wärmeeintrag in von der Schweißnaht benachbarten Materialbereichen.

Günstiger Weise ist ein Fügebereich zwischen der Sandwichplatte und dem Anschlussprofil spiegelsymmetrisch bezüglich einer mittleren Längsebene der Sandwichplatte im Bereich der beiden vorstehenden Randabschnitte der Decklagen ausgebildet. In dieser Weise sind beide vorstehenden Randabschnitte der Decklagen der Sandwichplatte in derselben Weise mit zugeordneten Außenflächen des Anschlussprofils gefügt sowie zur elektrischen Verbindung mit einer Schweißnaht versehen.

Ausführungsbeispiele der Erfindung werden nachfolgend unter Bezugnahme auf die Zeichnungen noch näher erläutert, wobei funktionsgleiche Komponenten mit denselben Bezugszeichen bezeichnet sind. Es zeigen:
- Figur 1: eine Querschnittsansicht eines Übergangsbereichs zwischen einer Sandwichplatte und einem Anschlussprofil bei einem Wagenkastenrohbau eines Schienenfahrzeugs,
- Figur 2: eine perspektivische Ansicht eines anderen Übergangsbereichs zwischen einer Sandwichplatte und einem Anschlussprofil und
- Figur 3: eine Querschnittsansicht eines weiteren Übergangsbereichs zwischen einer Sandwichplatte und einem Anschlussprofil.

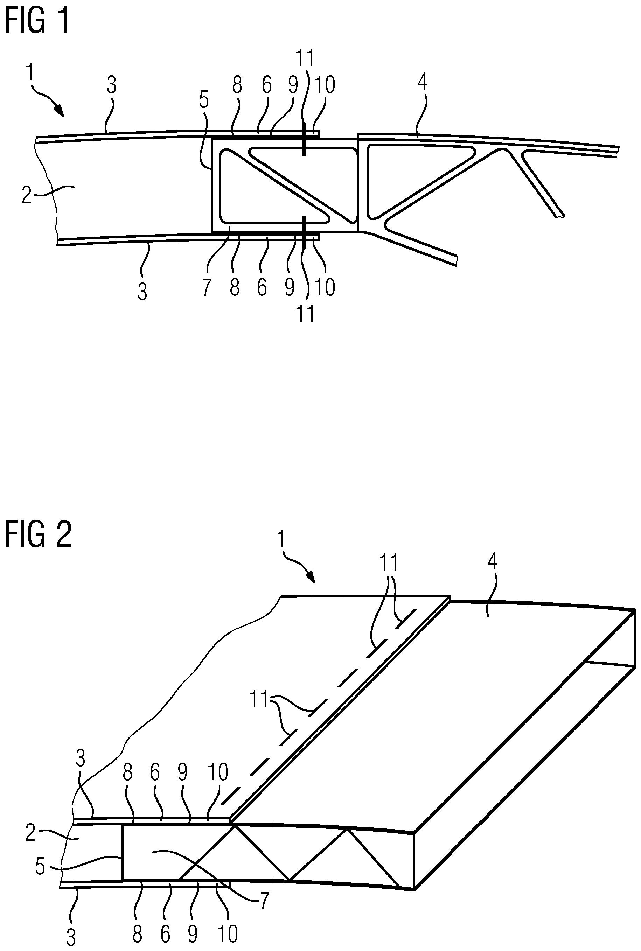

Wie in Figur 1 dargestellt ist, umfasst ein Rohbau eines Schienenfahrzeugs eine Sandwichplatte 1, die im vorliegenden Ausführungsbeispiel eine Dachwandung ausbildet. Die Sandwichplatte 1 weist eine Schaumkernschicht 2 auf, deren Ober- und Unterseite jeweils mit einer metallischen Decklage 3 belegt ist. Die Decklagen 3 sind mit der Schaumkernschicht 2 verklebt.

Zur Anbindung der Sandwichplatte 1 an ein Anschlussprofil 4 aus Aluminium zeigt die Sandwichplatte 1 von einer Stirnseite 5 der Schaumkernschicht 2 aus vorstehende Randabschnitte 6 der Decklagen 3. Die vorstehenden Randabschnitte 6 der Decklagen 3 bilden zwischen sich einen Zwischenraum aus, in den ein im vorliegenden Ausführungsbeispiel im Querschnitt rechtwinkelig ausgebildeter Randabschnitt 7 derart eingesetzt/eingepasst ist, dass er mit seiner Stirnseite gegen die Stirnseite 6 der Schaumkernschicht 2 stößt, während an den Innenseiten der Randabschnitte 6 zugeordnete Außenflächen des Randabschnitts 7 des Anschlussprofils 4 unter Zwischenlage von strukurellen Klebeschichten 8 anliegen.

Die strukturellen Klebeschichten 8 bewirken die eigentliche Anbindung der Sandwichplatte 1 an das Anschlussprofil 4.

Im dargestellten Ausführungsbeispiel beginnt eine jeweilige Klebeschicht 8 in Höhe der Stirnseite 6 der Schaumkernschicht 2 und erstreckt sich in Richtung auf das Anschlussprofil 4 über eine Breite von beispielsweise 35mm. Bedarfsweise können die Klebeschichten 8 auch weniger breit oder breiter sein, beispielsweise in dem Intervall von 20 bis 50mm liegen, insbesondere auch verschieden breit sein.

Im Ausführungsbeispiel nach Figur 1 schließt sich an die Klebeschichten 8 in Richtung auf das Anschlussprofil 5 Dichtbänder 9 an, welche einen Fluss des Klebstoffs beim Fügen der Sandwichplatte 1 mit dem Anschlussprofil 5 in Richtung auf das Anschlussprofil 4 verhindern.

Von den Dichtbänder 9 aus zeigen die Decklagen 3 Endbereiche 10. Diese Endbereiche 10 der Decklagen 3 überlappen ohne Klebeverbindung mit zugeordneten Außenflächen des Randabschnitts 7 des Anschlussprofils 4.

Etwa in der Mitte der Endbereiche 10 sind (schematisch dargestellte) als Stichnähte ausgeführte Schweißnähte 11 vorgesehen, die jeweils eine elektrisch leitende Verbindung zwischen den metallischen Decklagen 3 der Sandwichplatte 1 und dem metallischen Anschlussprofil 4 schaffen. Die Schweißnähte 11 befinden sich typischer Weise in einem Abstand von wenigstens 5mm von der auf der gleichen Seite der Sandwichplatte 1 vorhandenen Klebeschicht 8.

Die Schweißnähte 11 sind derart dimensioniert, dass sie für auftretende Ableitströme belastbar sind. Dazu reicht typischer Weise eine Nahtbreite von bis zu 6mm, ggf. auch bis zu 4mm aus.

Die Schweißnähte 11 sind geeigneter Weise per Laserschweißen hergestellt. Sie können, wie in Figur 2 dargestellt, als Schrittnähte ausgeführt sein, beispielsweise mit einer Länge einzelner Schweißnahtabschnitte von ca. 40mm, wobei Abstände zwischen benachbarten Schweißnahtabschnitten ca. 20mm betragen können.

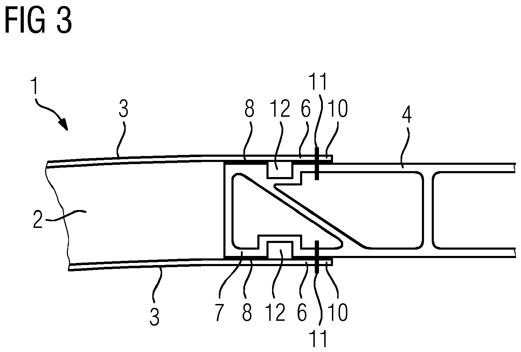

Der Übergangsbereich zwischen einer Sandwichplatte 1 und einem Anschlussprofil 4 nach Figur 3 entspricht weitestgehend demjenigen, wie es anhand von Figur 1 erläutert worden ist. Jedoch sind die Dichtbänder 9 zwischen den Klebeflächen 8 einerseits und den Endbereichen 10 andererseits durch sog. "Harzfallen" ersetzt, die in Form von Nuten 12 vorliegen. In diesen Nuten 12, die eine Breite von 5mm haben können, kann beim Verkleben der vorstehenden Randbereiche 6 der Decklagen 3 mit den zugeordneten Außenflächen des Randabschnitts 7 des Anschlussprofils 4 auftretender überflüssiger Klebstoff sammeln und gelangt somit nicht in die überlappenden Endbereiche 10, in denen die Schweißnähte 11 vorzusehen sind.

Ersichtlich ist der Fügebereich zwischen der Sandwichplatte 1 und dem Anschlussprofil 4 von der Stirnfläche 6 der Schaumkernschicht 2 aus bis zu den Enden der Decklagen 3 in Richtung auf das Anschlussprofil 4 spiegelsymmetrisch bezüglich einer mittleren Längsebene in diesem Bereich ausgebildet.

## Patentansprüche

1. Wandanordnung für ein Fahrzeug, mit einer Sandwichplatte (1), die eine Kernschicht (2) aufweist, die beidseitig mit jeweils einer metallischen Decklage (3) versehen ist, wobei an wenigstens einer Seite der Sandwichplatte (1) Randabschnitte (6) der Decklagen (3) von einer Stirnseite (5) der Kernschicht (2) aus vorstehen, und mit einem metallischen Anschlussprofil (4), das einen Randabschnitt (7) aufweist, der in einen Zwischenraum zwischen den zwei vorstehenden Randabschnitten (6) der Decklagen (3) eingesetzt ist, wobei Innenseiten der vorstehenden Randabschnitte (6) der Decklagen (3) mittels jeweils einer Klebeschicht (8) mit zugeordneten Außenflächen des eingesetzten Randabschnitts (7) des Anschlussprofils (4) strukturell verbunden sind,
**dadurch gekennzeichnet, dass**
wenigstens einer der vorstehenden Randabschnitte (6) der Decklagen (3) mit dem an seiner Innenseite anliegenden Randabschnitt (7) des Anschlussprofils (4) in einem Abstand zu der Klebeschicht (8) mittels einer Schweißnaht (11) elektrisch leitend verbunden ist.

2. Wandanordnung nach Anspruch 1,
**dadurch gekennzeichnet, dass**
an dem wenigstens einen vorstehenden Randabschnitt (6) die Klebeschicht (8) der Sandwichplatte (1) zugewandt und die Schweißnaht (11) dem Anschlussprofil (4) zugewandt angeordnet ist.

3. Wandanordnung nach einem der Ansprüche 1 oder 2,
**dadurch gekennzeichnet, dass**
an dem wenigstens einen vorstehenden Randabschnitt (6) zwischen der Klebeschicht (8) und der Schweißnaht (11) eine Dichtungsschicht (9) angeordnet ist.

4. Wandanordnung nach einem der Ansprüche 1 oder 2,
**dadurch gekennzeichnet, dass**
an dem wenigstens einen vorstehenden Randabschnitt (6) zwischen der Klebeschicht (8) und der Schweißnaht (11) eine Nut (12) zur Aufnahme überschüssigen Klebstoffs angeordnet ist.

5. Wandanordnung nach einem der Ansprüche 1 bis 4,
**dadurch gekennzeichnet, dass**
an dem wenigstens einen vorstehenden Randabschnitt (6) die Klebeschicht (8) eine Breite von 20 bis 50 mm aufweist.

6. Wandanordnung nach einem der Ansprüche 1 bis 5,
**dadurch gekennzeichnet, dass**
an dem wenigstens einen vorstehenden Randabschnitt (6) sich die Schweißnaht (11) in einem Abstand von wenigstens 5 mm von der Klebeschicht (8) befindet.

7. Wandanordnung nach einem der Ansprüche 1 bis 6,
**dadurch gekennzeichnet, dass**
an dem wenigstens einen vorstehenden Randabschnitt (6) die Schweißnaht (16, 17) als Schrittnaht ausgeführt ist.

8. Wandanordnung nach einem der Ansprüche 1 bis 7,
**dadurch gekennzeichnet, dass**
an dem wenigstens einen Randabschnitt (6) ein Klebeschicht (8) freier Endbereich (10) vorgesehen ist, der eine Breite von wenigstens 10 mm aufweist.

9. Wandanordnung nach einem der Ansprüche 1 bis 8,
**dadurch gekennzeichnet, dass**
die Sandwichplatte (1) eine Dachwandung bildet.

10. Wandanordnung nach einem der Ansprüche 1 bis 9,
**dadurch gekennzeichnet, dass**
die Schweißnaht (11) mittels Laserschweißen hergestellt ist.

11. Wandanordnung nach einem der Ansprüche 1 bis 10,
**dadurch gekennzeichnet, dass**
ein Fügebereich zwischen der Sandwichplatte (1) und dem Anschlussprofil (4) spiegelsymmetrisch bezüglich einer mittleren Längsebene der Sandwichplatte (1) im Bereich der beiden vorstehenden Randabschnitte (6) der Decklagen (3) ausgebildet ist.

## Claims

1. Wall arrangement for a vehicle, having a sandwich panel (1) which comprises a core layer (2) which is provided on both sides in each case with a metal cover layer (3), wherein edge portions (6) of the cover layers (3) protrude from an end face (5) of the core layer (2) on at least one side of the sandwich panel (1), and having a metal connecting profile (4) which comprises an edge portion (7) which is inserted into a space between the two protruding edge portions (6) of the cover layers (3), wherein inside surfaces of the protruding edge portions (6) of the cover layers (3) are connected structurally to assigned outside surfaces of the inserted edge portion (7) of the connecting profile (4) in each case by means of an adhesive layer (8), **characterized in that** at least one of the protruding edge portions (6) of the cover layers (3) is connected so as to be electrically conducting to the edge portion (7) of the connecting profile (4), said edge portion abutting against the inside surface of said protruding edge portion of the cover layers, at a spacing from the adhesive layer (8) by means of a weld seam (11).

2. Wall arrangement according to Claim 1, **characterized in that** the adhesive layer (8) is arranged facing the sandwich panel (1) and the weld seam (11) is arranged facing the connecting profile (4) on the at least one protruding edge portion (6).

3. Wall arrangement according to either of Claims 1 and 2, **characterized in that** a sealing layer (9) is arranged between the adhesive layer (8) and the weld seam (11) on the at least one protruding edge portion (6).

4. Wall arrangement according to either of Claims 1 and 2, **characterized in that** a groove (12) for receiving excessive adhesive is arranged between the adhesive layer (8) and the weld seam (11) on the at least one protruding edge portion (6) .

5. Wall arrangement according to one of Claims 1 to 4, **characterized in that** the adhesive layer (8) has a width of between 20 and 50 mm on the at least one protruding edge portion (6).

6. Wall arrangement according to one of Claims 1 to 5, **characterized in that** the weld seam (11) is situated at a spacing of at least 5 mm from the adhesive layer (8) on the at least one protruding edge portion (6).

7. Wall arrangement according to one of Claims 1 to 6, **characterized in that** the weld seam (16, 17) is realized as a step seam on the at least one protruding edge portion (6).

8. Wall arrangement according to one of Claims 1 to 7, **characterized in that** an adhesive layer (8) free end region (10) which comprises a width of at least 10 mm is provided on the at least one protruding edge portion (6).

9. Wall arrangement according to one of Claims 1 to 8, **characterized in that** the sandwich panel (1) forms a roof wall.

10. Wall arrangement according to one of Claims 1 to 9, **characterized in that** the weld seam (11) is produced by means of laser welding.

11. Wall arrangement according to one of Claims 1 to 10, **characterized in that** a joining region between the sandwich panel (1) and the connecting profile (4) is realized in a mirror-symmetrical manner with reference to a middle longitudinal plane of the sandwich panel (1) in the region of the two protruding edge portions (6) of the cover layers (3).

## Revendications

1. Agencement de paroi pour un véhicule, comprenant une plaque (1) sandwich, qui a une couche (2) d'âme, pourvue, sur les deux faces, respectivement, d'une couche (3) métallique extérieure, dans lequel, sur au moins une face de la plaque (1) sandwich, des parties (6) de bord des couches (3) extérieures dépassent d'un côté (5) frontal de la couche (2) d'âme, et comprenant un profilé (4) métallique de raccordement, qui a une partie (7) de bord insérée dans un espace intermédiaire entre les deux parties (6) de bord en dépassement des couches (3) extérieures, des faces intérieures des parties (6) de bord en dépassement des couches (3) extérieures étant, au moyen, respectivement, d'une couche (8) de colle, reliées structurellement à des faces extérieures associées de la partie (7) de bord insérée du profilé (4) de raccordement,
**caractérisé en ce qu'**
au moins l'une des parties (6) de bord en dépassement des couches (3) extérieures est reliée, d'une manière conductrice de l'électricité au moyen d'un cordon (11) de soudure, à distance de la couche (8) de colle, à la partie (7) de bord, s'appliquant à sa face intérieure, du profilé (4) de raccordement.

2. Agencement de paroi suivant la revendication 1,
**caractérisé en ce que**,
sur la au moins une partie (6) de bord en dépassement, la couche (8) de colle est tournée vers la plaque (1) sandwich et le cordon (11) de soudure est tourné vers le profilé (4) de raccordement.

3. Agencement de paroi suivant l'une des revendications 1 ou 2,
**caractérisé en ce que**,
sur la au moins une partie (6) de bord en dépassement, une couche (9) d'étanchéité est disposé entre la couche (8) de colle et le cordon (11) de soudure.

4. Agencement de paroi suivant l'une des revendications 1 ou 2,
**caractérisé en ce que**,
sur la au moins une partie (6) de bord en dépassement, une rainure (12) de réception de colle en excès est disposée entre la couche (8) de colle et le cordon (11) de soudure.

5. Agencement de paroi suivant l'une des revendications 1 à 4, **caractérisé en ce que**,
sur la au moins une partie (6) de bord en dépassement, la couche (8) de colle a une largeur de 20 à 50 mm.

6. Agencement de paroi suivant l'une des revendications 1 à 5, **caractérisé en ce que**,
sur la au moins une partie (6) de bord en dépassement, le cordon (11) de soudure se trouve à une distance de moins de 5 mm de la couche (8) de colle.

7. Agencement de paroi suivant l'une des revendications 1 à 6, **caractérisé en ce que**,
sur la au moins une partie (6) de bord en dépassement, le cordon (16, 17) de soudure est réalisé sous la forme d'un cordon pas à pas.

8. Agencement de paroi suivant l'une des revendications 1 à 7, **caractérisé en ce que**,
sur au moins une partie (6) de bord, est prévue une région (10) d'extrémité exempte de couche (8) de colle et ayant une largeur d'au moins 10 mm.

9. Agencement de paroi suivant l'une des revendications 1 à 8, **caractérisé en ce que**
la plaque (1) sandwich forme une paroi de toit.

10. Agencement de paroi suivant l'une des revendications 1 à 9, **caractérisé en ce que**
le cordon (11) de soudure est fabriqué au moyen d'une soudure laser.

11. Agencement de paroi suivant l'une des revendications 1 à 10,
**caractérisé en ce qu'**
une région de joint, entre la plaque (1) sandwich et le profilé (4) de raccordement, est symétrique comme en un miroir par rapport à un plan longitudinal médian de la plaque (1) sandwich dans la région des deux parties (6) de bord en dépassement des couches (3) extérieures.
